# EUROPÄISCHE PATENTSCHRIFT

(11) **EP 0 525 498 B1**
(45) Veröffentlichungstag und Bekanntmachung des Hinweises auf die Patenterteilung: **13.12.1995**
(21) Anmeldenummer: 92111930.1
(22) Anmeldetag: 14.07.1992
(51) Int. Cl.: B25D 17/26, F16N 27/00

(54) **Werkzeug-Einsteckende eines fluidbetriebenen Schlagwerks mit einer Schmiereinrichtung**
Tool chuck of a fluid driven impact hammer with lubricating device
Porte-outil d'un marteau à coup actionné par un fluide avec dispositif de graissage

(30) Priorität: 30.07.1991 DE 4125132
(43) Veröffentlichungstag der Anmeldung: 03.02.1993
(73) Patentinhaber: KRUPP MASCHINENTECHNIK GESELLSCHAFT MIT BESCHRÄNKTER HAFTUNG, 45143 Essen (DE)
(72) Erfinder: Bartels, Robert-Jan, Dr.-Ing., W-4300 Essen 17 (DE); Piotrowski, Hans-Dieter, Ing., W-4300 Essen 1 (DE); Vielhaber, Heribert, Ing., W-4300 Essen 1 (DE)

(56) Entgegenhaltungen:
- EP-A- 0 255 312
- EP-A- 0 430 024
- US-A- 2 425 515
- US-A- 4 047 595

## Beschreibung

Die Erfindung bezieht sich auf ein Werkzeug-Einsteckende eines fluidbetriebenen Schlagwerks mit einer Schmiereinrichtung, mittels welcher die das Werkzeug-Einsteckende abstützende Führung an einer Stelle oder an mehreren in Schlagwerk-Längsrichtung aufeinanderfolgenden Stellen über in die Führung einmündende, mit einer Schmierfettzuführung verbundene Schmierkanäle mit Schmierfett beaufschlagt wird.

Insbesondere bei höherer und höchster Beanspruchung des Schlagwerks hat sich die Verwendung von Fetten - ggf. auch mit sehr hohem Festschmierstoffgehalt (beispielsweise Meißelpasten) - als Schmiermittel als vorteilhaft erwiesen; diese sind aufgrund ihrer Viskosität und ihres Festschmierstoffgehaltes allerdings bereits bei normalen Umgebungstemperaturen schwer förderbar, wodurch die Zuführung in den Bereich der jeweiligen Schmierstelle unter Umständen in Frage gestellt ist.
Mit der DE-A1-39 39 785 ist eine automatische Schmiereinrichtung für den Meißel eines hydraulischen Schlagwerks beschrieben worden, mittels welcher sich Fette mit sehr hohem Festschmierstoffgehalt auch bei tieferen Temperaturen zuverlässig in den Bereich der Führung fördern lassen. Die Schmiereinrichtung weist eine an einen Schmiermittel-Vorratsbehälter angeschlossene Fördereinheit auf, deren Förderdruck vom Schlagwerk-Betriebsdruck hervorgerufen wird und die jeweils bei Beaufschlagung des Schlagwerks mit dem Betriebsdruck einen vorgegebenen Förderhub mit einstellbarer Größe ausführt.
Schwierigkeiten im Hinblick auf eine gleichmäßige Schmiermittelverteilung können sich dabei insbesondere in den Fällen ergeben, in denen jeweils mehrere bezüglich der Schmierfettzuführung unterschiedlich angeordnete Schmierkanäle gleichzeitig mit Schmierfett versorgt werden müssen.

Der Erfindung liegt die Aufgabe zugrunde, eine Vorrichtung der eingangs erwähnten Gattung in der Weise auszugestalten, daß bezüglich der Schmierfettzuführung sehr unterschiedlich angeordnete Schmierkanäle - ggf. auch in größerer Anzahl - mit vertretbarem Aufwand und ausreichender Betriebssicherheit gleichmäßig mit Schmierfett versorgt werden können.
Ggf. soll die Vorrichtung im Hinblick auf ihre Betriebssicherheit in der Weise weitergebildet sein, daß die Zufuhr für Schmierfett in den Bereich der Schmierkanäle überwacht werden kann.

Die Aufgabe wird durch eine Vorrichtung mit den Merkmalen des Anspruchs 1 gelöst. Der Grundgedanke der Erfindung besteht danach darin, die Schmierkanäle - abhängig von ihrer jeweiligen Lage bezüglich der Schmierfettzuführung - derart auszubilden, daß sie untereinander einen in der Größe abgestuften Drosselwiderstand aufweisen. Die Abstufung wird dabei in der Weise verwirklicht, daß der Drosselwiderstand mit größer werdender Länge des vom Schmierfett zurückzulegenden Schmierfettwegs von Schmierkanal zu Schmierkanal abnimmt.
Mit anderen Worten ausgedrückt, sind die unmittelbar in die Führung einmündenden Schmierkanäle unterschiedlich derart ausgestaltet, daß der Schmierkanal, welchem der kürzere vom Schmierfett zurückzulegende Zuführweg zugeordnet ist, einen größeren Drosselwiderstand aufweist als ein Schmierkanal, dessen Versorgung mit Schmierfett das Zurücklegen eines längeren Zuführweges erforderlich macht.
Die Schmierkanäle bestehen im einfachsten Fall aus Bohrungen, die einerseits in die Führung einmünden und die andererseits mittelbar über Verbindungskanäle oder unmittelbar an die Schmierfettzuführung angeschlossen sind.

Der Erfindungsgegenstand kann in der Weise ausgestaltet sein, daß die Schmierkanäle zumindest zum Teil mit Drosselelementen ausgestattet sind (Anspruch 2); diese verursachen die unterschiedliche Drosselwirkung, welche die an den einzelnen Schmierkanälen in den Bereich der Führung austretende Schmierfettmenge vergleichmäßigt. Im einfachsten Fall bestehen die Drosselelemente aus Engstellen in den Schmierkanälen. Insbesondere können dabei mit einer Längsbohrung versehene Bolzen oder Gewindebolzen zum Einsatz kommen, welche lösbar in den jeweiligen Schmierkanal eingesetzt sind.
Bei einer vorteilhaften Ausführungsform des Erfindungsgegenstandes sind die Drosselelemente als Verstelldrosseln ausgebildet (Anspruch 3); dies hat den Vorteil, daß sich der Drosselwiderstand der einzelnen Schmierkanäle auch nachträglich in der gewünschten Weise verändern läßt. Dementsprechend kann auch eine verschleißbedingte Änderung des Förderwiderstands kompensiert werden.
Vorzugsweise sind die Verstelldrosseln mit Gewindebolzen ausgestattet, deren konischer Kopf mehr oder weniger weit in den Anfangsabschnitt des zugehörigen Schmierkanals hineinragt und die sich ihrerseits - von außen betätigbar - in einer Gewindebohrung abstützen.
Die Verstelldrosseln ermöglichen es auch, die Arbeitsweise der Schmiereinrichtung an Änderungen im Bereich der Führung anzupassen, welche beispielsweise durch Verschleiß hervorgerufen sind.

Grundsätzlich kann die Schmierfettzuführung auch außerhalb des Gehäuses für die Meißelführung angebracht sein. Mit Rücksicht auf die rauhen Arbeitsbedingungen, denen insbesondere auch das Gehäuse für die Meißelführung ausgesetzt ist, sollte die Schmierfettzuführung im Bereich der Meißelführung in dem diese aufnehmenden Gehäuse verlaufen (Anspruch 4).

Die Schmierfettzuführung ist zweckmäßig als in Schlagwerk-Längsrichtung verlaufende Schmierleitung ausgebildet, die mit mehreren Ringleitungen mit jeweils mehreren Schmierkanälen in Verbindung steht (Anspruch 5). Dem Lösungsgedanken der Erfindung entsprechend weisen dabei die Schmierkanäle, welche in größerer Entfernung von der Schmierleitung angeordnet sind, einen kleineren Drosselwiderstand auf als die der Schmierleitung näherliegenden Schmierkanäle. Die von Schmierkanal zu Schmierkanal abgestufte Drosselwirkung sollte dabei derart bemessen sein, daß die einzelnen Schmierkanäle möglichst gleichmäßig mit Schmierfett versorgt werden.

Die Ringleitungen können an die Schmierleitung auch über Querbohrungen angeschlossen sein, deren Drosselwiderstand in Abhängigkeit von der Länge des Schmierfett-Zuführweges unterschiedlich groß bemessen ist und mit dessen Länge von Querbohrung zu Querbohrung abnimmt (Anspruch 6).
Die erforderliche Drosselwirkung läßt sich dabei in der Weise erzeugen, wie sie zuvor für die Schmierkanäle beschrieben worden ist.
Insbesondere können die Querbohrungen zumindest zum Teil mit Verstelldrosseln ausgestattet sein (Anspruch 7).

Die Betriebssicherheit der Schmiereinrichtung - und damit auch diejenige des Schlagwerks - läßt sich durch Verwendung einer Schmierdrucküberwachung mit einem Druckaufnehmer weiter verbessern. Diese ist zumindest einem Schmierkanal zugeordnet (Anspruch 8).
Falls die Schmiereinrichtung mehrere Ringleitungen aufweist (vgl. dazu Anspruch 5), kann die Schmierfettverteilung auch in der Weise beobachtet werden, daß jede Ringleitung mit einer Schmierdrucküberwachung ausgestattet ist.
Eine besonders einfache Ausführungsform läßt sich dadurch verwirklichen, daß lediglich ein einziger Schmierkanal eine Schmierdrucküberwachung aufweist, nämlich derjenige, welchem der längste Schmierfett-Zuführweg zugeordnet ist (Anspruch 9). Bei einer derartigen Ausführungsform wird also nur der hinsichtlich seiner Lage bezüglich der Schmierfettzuführung kritischste Schmierkanal überwacht.

Im Rahmen der Erfindung ist die Schmierdrucküberwachung derart ausgebildet, daß Sie ein Störsignal auslöst, falls die Größe des gemessenen Schmierfettdrucks unter einen vorgegebenen, einstellbaren Grenzwert absinkt (Anspruch 10).
Eine etwa auftretende Störung kann über eine Anzeigeeinheit optisch und/oder akustisch für eine Bedienungsperson erkennbar gemacht werden. Stattdessen oder auch zusätzlich zur Anzeige kann das Störsignal auch dazu eingesetzt werden, durch Eingriff in die Steuerung oder die Energieversorgung des Schlagwerks dessen Abschaltung herbeizuführen.

Die Erfindung wird nachfolgend anhand eines in der Zeichnung dargestellten Ausführungsbeispiels im einzelnen erläutert; dieses bezieht sich auf ein hydraulisch betriebenes Schlagwerk mit einer einen Meißel abstützenden Führung. Es zeigen:
- Fig. 1: stark schematisiert einen Hydraulikbagger, der einem schwenkbar befestigten hydraulischen Schlagwerk als Trägereinheit dient und auch eine Fördereinheit antreibt, mittels welcher der Schlagwerk-Meißel mit Schmierfett versorgt wird,
- Fig. 2: schematisiert eine Ansicht des Schlagwerks nebst Gehäuse für die Führung des nicht dargestellten Meißels,
- Fig. 3: teilweise geschnitten das die Meißelführung aufnehmende Gehäuse und in Form eines Schaltschemas eine einem Schmierkanal zugeordnete Schmierdrucküberwachung,
- Fig. 4: das Leitungsschema für die in Fig. 3 dargestellte Ausführungsform mit einer Schmierleitung, an welche zwei Ringleitungen mit jeweils vier Schmierkanälen angeschlossen sind, und
- Fig. 5: einen Teilausschnitt des Gehäuses gemäß Fig. 3 im Bereich einer Querbohrung, welche mit einer Verstelldrossel ausgestattet ist.

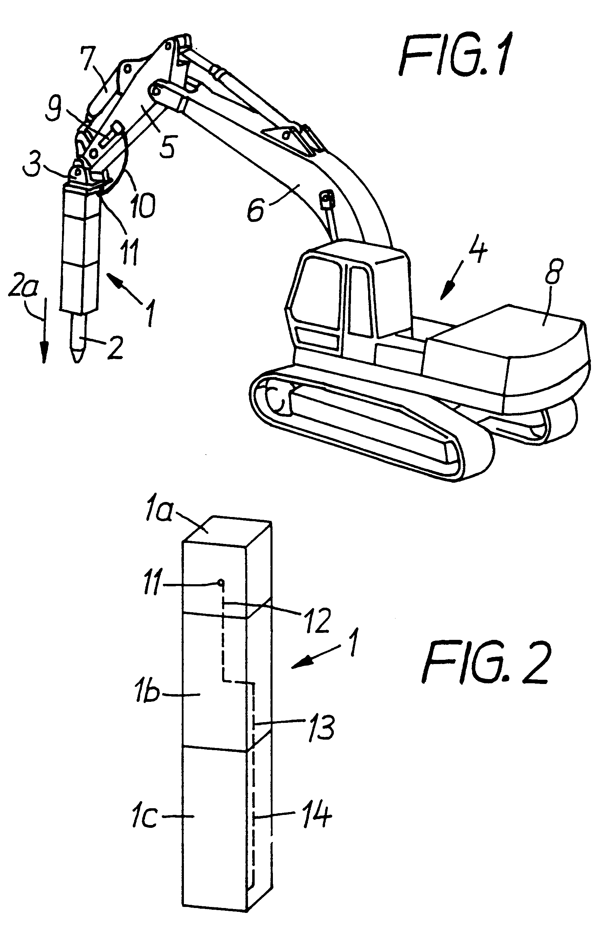

Fig. 1 zeigt ein hydraulisch betriebenes Schlagwerk 1 mit zugehörigem, angetriebenem Meißel 2, welches über eine Anschlußkonsole 3 mit einer Trägereinheit in Gestalt eines Hydraulikbaggers 4 in Verbindung steht. Die Anschlußkonsole 3 ist einerseits an einem Schwenkarm 5 und einem mit diesem verbundenen Tragarm 6 des Hydraulikbaggers gehalten und andererseits über einen Hydraulikzylinder 7 relativ zum Schwenkarm 5 bewegbar.
Der Hydraulikbagger 4 weist u. a. ein als Energieversorgung dienendes Hydraulikaggregat 8 auf, welches in an sich bekannter Weise das Schlagwerk 1 antreibt und auch eine als Pumpe ausgebildete Fördereinheit 9 mit Druckenergie versorgt.

Der Förderausgang der Fördereinheit 9, welche in der Nähe der Anschlußkonsole 3 an dem Schwenkarm 5 befestigt ist, steht über einen Schlauch 10 mit einer Anschlußstelle 11 unterhalb der Anschlußkonsole 3 in Verbindung.
Die Anschlußstelle 11 bildet gleichzeitig den Anfangsabschnitt einer Schmierleitung, welche im übrigen innerhalb des Schlagwerks 1 und im wesentlichen in dessen Längsrichtung verläuft (vgl. dazu Fig. 2).
Wegen des Aufbaus und der Wirkungsweise der Fördereinheit 9 wird auf die DE-A1-39 39 785 Bezug genommen. Danach ist an die Fördereinheit ein nicht dargestellter Vorratsbehälter mit Schmierfett angeschlossen, welches unter Einwirkung einer Vorspannung dem Förderraum der Fördereinheit zuführbar ist. Diese wird von dem auch das Schlagwerk 1 antreibenden Betriebsdruck betätigt und ist derart ausgebildet, daß sie jeweils bei Beaufschlagung des Schlagwerks mit dem Betriebsdruck einen vorgegegebenen Förderhub mit einstellbarer Größe ausführt und dabei Schmierfett in Richtung auf die Anschlußstelle 11 transportiert.

Gemäß Fig. 2 weist das Schlagwerk 1 gehäuseseitig drei Hauptbestandteile auf, nämlich ein die Schlagwerksteuerung aufnehmendes Kopfteil 1a, an dem auch die Anschlußstelle 11 angebracht ist, ein Mittelteil 1b, in dem der nicht dargestellte, hinund herbewegte Schlagkolben angeordnet ist, und ein Gehäuse 1c, welches u. a. die Meißelführung zur Abstützung des (in Fig. 1 dargestellten) Meißels 2 enthält.
Der Verlauf der Schmierleitung zur Versorgung der Meißelführung mit Schmierfett ist in Fig. 2 schematisch angedeutet. Die Schmierleitung setzt sich danach aus ineinanderübergehenden Leitungsabschnitten 12, 13 und 14 zusammen, welche - im wesentlichen in Längsrichtung - innerhalb der Teile 1a, 1b bzw. 1c liegen.

Das den Meißel 2 (vgl. dazu Fig. 1) abstützende Gehäuse 1c weist eine Längsbohrung 15 auf, in welcher mit Abstand voneinander und über eine Schrumpfpassung zwei Lagerbuchsen 16 und 17 befestigt sind; diese stützen sich entgegen der Schlagrichtung (vgl. Pfeil 2a in Fig. 1) an einem Ringabsatz 18 bzw. 19 ab.
Seitlich außerhalb des Bereichs der Durchgangsbohrung 15 und der Lagerbuchsen 16, 17 ist die bereits erwähnte, im wesentlichen als Längsbohrung ausgebildete Schmierleitung 14 verlegt, welche als Schmierfettzuführung dient. Die Schmierleitung geht - in Richtung der Zuführbewegung (Pfeil 20) des Schmierfetts in das Gehäuse 1c gesehen - über eine Querbohrung 21 in eine erste Ringleitung 22 und über eine Querbohrung 23 in eine zweite Ringleitung 24 über. Die beiden Ringleitungen sind dabei jeweils von einer Ringnut gebildet, die in Richtung auf die Durchgangsbohrung 15 durch die Lagerbuchsen 16, 17 abgedeckt ist. Letztere weisen in Höhe der jeweils zugehörigen Ringleitung 22 bzw. 24 jeweils mehrere Schmierkanäle in Form von Bohrungen auf, durch welche Schmierfett aus dem Bereich der Ringleitungen 22, 24 in den Bereich der Durchgangsbohrung 15 eintreten kann.

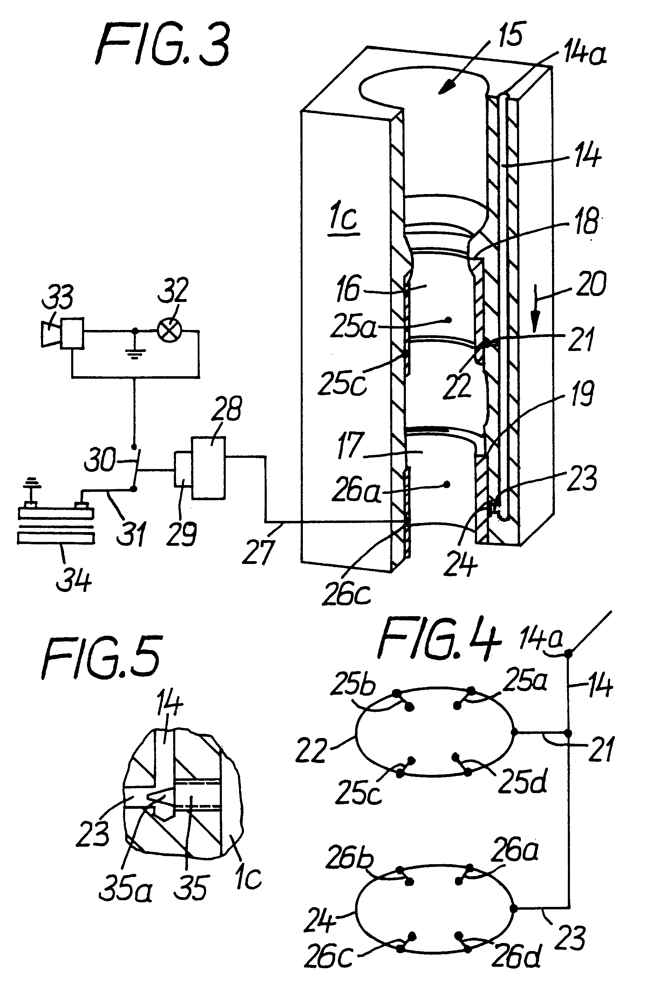

Wie Fig. 4 besser erkennen läßt, gehen von den Ringleitungen 22, 24 jeweils vier Schmierkanäle 25a bis 25d bzw. 26a bis 26d aus.
Nach der Lehre der Erfindung weisen die zuvor genannten Schmierkanäle - in Abhängigkeit von ihrer Lage bezüglich der Schmierfettzuführung (Schmierleitung 14) - untereinander einen in der Größe abgestuften Drosselwiderstand auf; dieser ist derart bemessen, daß er mit größer werdender Länge des vom Schmierfett zurückzulegenden Zuführweges jeweils von Schmierkanal zu Schmierkanal abnimmt. Ausgehend beispielsweise vom Anfangsabschnitt 14a der Schmierleitung 14 ist der Zuführweg des Schmierfetts bis zur ersten Ringleitung 22 kleiner als derjenige bis zur zweiten Ringleitung 24; darüber hinaus liegen die Schmierkanäle 25a, d bzw. 26a, d der Schmierleitung 14 jeweils näher als die weiteren zugehörigen Schmierkanäle 25b, c bzw. 26b, c. Dieser unterschiedlichen Anordnung wird zur Vergleichmäßigung der Schmierfettzufuhr in den Bereich der Lagerbuchsen 16, 17 (vgl. dazu Fig. 3) dadurch Rechnung getragen, daß - bei gleichartiger Ausbildung der Querbohrungen 21 und 23 - der Drosselwiderstand der Schmierkanäle 26a, d größer ist als derjenige der Schmierkanäle 26b, c und kleiner als derjenige der Schmierkanäle 25a, d; diese weisen wiederum einen größeren Drosselwiderstand auf als die zugehörigen Schmierkanäle 25b, c.
Im Rahmen des erfindungsgemäßen Lösungsgedankens läßt sich die Schmierfettzuführung in den Bereich der Ringleitungen 22 und 24 - ggf. auch zusätzlich - dadurch beeinflussen, daß (wie in Fig. 3 dargestellt) die Querbohrung 21 mit Rücksicht auf den zugehörigen kürzeren Zuführweg einen kleineren Querschnitt aufweist als die in die zweite Ringleitung 24 übergehende Querbohrung 23.

Die Betriebssicherheit der zuvor beschriebenen Schmiereinrichtung - und damit die Betriebssicherheit des Schlagwerks 1 - läßt sich dadurch weiter verbessern, daß zumindest ein Schmierkanal mit einer Schmierdrucküberwachung ausgestattet ist. Das Absinken des Schmierdrucks an der Überwachungsstelle macht erkennbar, daß dort keine oder eine nicht ausreichende Versorgung mit Schmierfett vorliegt; diese Information ermöglicht es, entweder durch mehrfaches Ab- und Einschalten des Schlagwerks 1 die Schmierfettzufuhr unterstützend zu beeinflussen oder erforderlichenfalls das Schlagwerk stillzusetzen. Eine besonders einfache Ausführungsform der Schmierdrucküberwachung läßt sich dadurch verwirklichen, daß lediglich ein Schmierkanal - beispielsweise der Schmierkanal 26c - überwacht wird, welchem der längste Schmierfett-Zuführweg zugeordnet ist (Fig. 3).
Der hinsichtlich seiner Lage als besonders kritisch anzusehende Schmierkanal 26c steht über eine Meßleitung 27 mit einem Druckfühler 28 in Verbindung. Über diesen ist mittels eines Stellantriebs 29 ggf. ein Schalter 30 verstellbar, welcher in der (nicht dargestellten) Schließstellung über eine Leitung 31 eine Kontrollampe 32 und ein Signalhorn 33 mit einer Energiequelle in Form einer Batterie 34 verbindet und dadurch ein optisch und akustisch erkennbares Störsignal erzeugt. Der Druckfühler 28 ist im Zusammenwirken mit dem Stellantrieb 29 also in der Weise ausgebildet und geschaltet, daß der Schalter 30 nur dann (beispielsweise entgegen der Wirkung einer Rückstellkraft) seine nicht dargestellte Schließstellung einnimmt, falls der von der Meßleitung 27 ermittelte Schmierfettdruck unter einen vorgegebenen, am Druckfühler 28 einstellbaren Grenzwert absinkt.
Die zuvor beschriebene Schmierdrucküberwachung läßt sich insbesondere auch in der Weise abwandeln, daß das vom Druckfühler 28 erzeugte Störsignal dazu eingesetzt wird, das Schlagwerk 1 durch Eingriff in seine Steuerung oder durch Unterbrechen der Druckenergie stillzusetzen.
Darüber hinaus kann die Schmierdrucküberwachung auch in der Weise erfolgen, daß jede Ringleitung 22, 24 mit einer Meßleitung nebst Überwachungszubehör ausgestattet ist.

Die bereits erwähnte Ausbildung der Schmierkanäle 25a bis 25d und 26a bis 26d mit untereinander in der Größe abgestuften Drosselwiderständen läßt sich in einfacher Weise dadurch verwirklichen, daß die Schmierkanäle und ggf. auch die Querbohrungen 21, 23 einen unterschiedlichen Querschnitt, beispielsweise in Form einer Engstelle, aufweisen. Der Drosselwiderstand läßt sich jedoch auch durch Verwendung besonderer Drosselelemente beeinflussen, welche den Querschnitt der Schmierkanäle und ggf. Querbohrungen verändern.
Eine besonders zweckmäßige Ausführungsform, bei welcher sich der Drosselwiderstand beispielsweise der Querbohrung 23 feinfühlig von außen einstellen läßt, ist in Fig. 5 dargestellt. Der Querbohrung 23 liegt dabei bezüglich der Schmierleitung 14 ein Gewindebolzen 35 gegenüber, der sich drehbar in dem Gehäuse 1c abstützt.
Der Gewindebolzen ist mit einem konischen Kopf 35a ausgestattet, der zum Teil in die Querbohrung 23 hineinragt und dadurch deren wirksamen Querschnitt verkleinert. Durch Drehen des Gewindebolzens 35 in Richtung auf die Querbohrung 23 bzw. von dieser weg kann also deren Drosselwiderstand in der gewünschten Weise - beispielsweise auch an sich ändernde Betriebsbedingungen - angepaßt werden. Die in Rede stehende Ausgestaltung mit Verstelldrosseln ist auch im Hinblick auf die Schmierkanäle 25a bis 25d und 26a bis 26d anwendbar. Dabei sind in das Gehäuse 1c beispielsweise von außen zugängliche Gewindebolzen eingeschraubt, deren konischer Kopf mehr oder weniger weit in den betreffenden Schmierkanal hineinragt und dessen wirksamen Querschnitt beeinflußt.

Die Erfindung kann auch im Zusammenhang mit fluidbetriebenen Schlagwerken zur Anwendung kommen, die einem anderen Einsatzzweck dienen und mit andersartig ausgebildeten Werkzeugen ausgestattet sind, wie beispielsweise Rammvorrichtungen oder Schlagbohrvorrichtungen.

## Patentansprüche

1. Werkzeug-Einsteckende eines fluidbetriebenen Schlagwerks (1) mit einer Schmiereinrichtung, mittels welcher die das Werkzeug-Einsteckende abstützende Führung (16, 17) an einer Stelle oder an mehreren in Schlagwerk-Längsrichtung aufeinanderfolgenden Stellen über in die Führung (16, 17) einmündende, mit einer Schmierfettzuführung verbundene Schmierkanäle (25a bis 25d, 26a bis 26d) mit Schmierfett beaufschlagt wird, **dadurch gekennzeichnet,**
daß die Schmierkanäle (25a bis 25d, 26a bis 26d) untereinander einen in der Größe abgestuften Drosselwiderstand aufweisen, der in Abhängigkeit von der Lage des betreffenden Schmierkanals bezüglich der Schmierfettzuführung (14) derart bemessen ist, daß er mit größer werdender Länge des vom Schmierfett zurückzulegenden Zuführweges jeweils von Schmierkanal (25a, d bzw. 26a, d) zu Schmierkanal (25b, c bzw. 26b, c) abnimmt.

2. Vorrichtung nach Anspruch 1, dadurch gekennzeichnet, daß die Schmierkanäle (25a bis d bzw. 26a bis d) zumindest zum Teil mit Drosselelementen ausgestattet sind.

3. Vorrichtung nach Anspruch 2, dadurch gekennzeichnet, daß die Drosselelemente als Verstelldrosseln ausgebildet sind.

4. Vorrichtung nach zumindest einem der vorhergehenden Ansprüche, dadurch gekennzeichnet, daß die Schmierfettzuführung (14) im Bereich der Führung (Lagerbuchsen 16, 17) in dem diese aufnehmenden Gehäuse (1c) verläuft.

5. Vorrichtung nach zumindest einem der vorhergehenden Ansprüche, dadurch gekennzeichnet, daß die Schmierfettzuführung als in Meißel-Längsrichtung verlaufende Schmierleitung (14) ausgebildet ist, die mit mehreren Ringleitungen (22, 24) mit jeweils mehreren Schmierkanälen (25a bis d bzw. 26a bis d) in Verbindung steht.

6. Vorrichtung nach Anspruch 5, dadurch gekennzeichnet, daß die Ringleitungen (22, 24) an die Schmierleitung (14) über Querbohrungen (21, 23) angeschlossen sind, deren Drosselwiderstand in Abhängigkeit von der Länge des Schmierfett-Zuführweges unterschiedlich groß bemessen ist und mit dessen Länge von Querbohrung (21) zu Querbohrung (23) abnimmt.

7. Vorrichtung nach Anspruch 6, dadurch gekennzeichnet, daß die Querbohrungen (23) zumindest zum Teil mit Verstelldrosseln (35) ausgestattet sind.

8. Vorrichtung nach zumindest einem der vorhergehenden Ansprüche, dadurch gekennzeichnet, daß zumindest ein Schmierkanal (26c) mit einer Schmierdrucküberwachung (27 bis 29) ausgestattet ist.

9. Vorrichtung nach zumindest einem der vorhergehenden Ansprüche, dadurch gekennzeichnet, daß der Schmierkanal (26c) eine Schmierdrucküberwachung aufweist, welchem der längste Schmierfett-Zuführweg zugeordnet ist.

10. Vorrichtung nach zumindest einem der Ansprüche 8 bis 9, dadurch gekennzeichnet, daß mittels der Schmierdrucküberwachung (27 bis 29) ein Störsignal ausgelöst wird, falls die Größe des gemessenen Schmierfettdrucks unter einen vorgegebenen, einstellbaren Grenzwert absinkt.

## Claims

1. Tool chuck of a fluid-driven impact hammer (1) with a lubricating device, by means of which grease is applied to the guide means (16, 17) supporting the tool chuck at a point or at several consecutive points in the longitudinal direction of the impact hammer via lubrication ducts (25a to 25d, 26a to 26d) opening into the guide means (16, 17) and connected to a grease supply means, characterised in that the lubrication ducts (25a to 25d, 26a to 26d) have a throttle resistance in relation to one another, which is graded in magnitude and is dimensioned in dependence on the position of the respective lubrication duct relative to the grease supply means (14) in such a way that it decreases respectively from lubrication duct (25a, d or 26a, d) to lubrication duct (25b, c or 26b, c), the greater the length of the supply path to be covered by the grease.

2. Device according to Claim 1, characterised in that the lubrication ducts (25a to d or 26a to d) are at least partially equipped with throttle elements.

3. Device according to Claim 2, characterised in that the throttle elements are constructed as adjustable throttle valves.

4. Device according to at least one of the preceding claims, characterised in that the grease supply means (14) runs in the area of the guide means (bearing bushes 16, 17) in the housing (1c) receiving these.

5. Device according to at least one of the preceding claims, characterised in that the grease supply means is constructed as a lubrication pipe (14) running in the longitudinal direction of the bit and connecting with several ring pipes (22, 24) with several corresponding lubricant ducts (25a to d or 26a to d).

6. Device according to Claim 5, characterised in that the ring pipes (22, 24) are connected to the lubricant pipe (14) via transverse holes (21, 23), the throttle resistance of which is graded in magnitude in dependence on the length of the grease supply path and with the length thereof decreases from transverse hole (21) to transverse hole (23).

7. Device according to Claim 6, characterised in that the transverse holes (23) are equipped at least partially with adjustable throttle valves (35).

8. Device according to at least one of the preceding claims, characterised in that at least one lubrication duct (26c) is equipped with a lubricant pressure monitoring means (27 to 29).

9. Device according to at least one of the preceding claims, characterised in that the lubrication duct (26c) has a lubricant pressure monitoring means, to which the longest grease supply path is allocated.

10. Device according to at least one of Claims 8 to 9, characterised in that a fault signal is triggered by means of the lubricant pressure monitoring means (27 to 29) if the magnitude of the measured lubricant pressure drops to below a predetermined adjustable limit value.

## Revendications

1. Extrémité d'emmanchement d'outil d'un mécanisme de frappe (1) entraîné par un fluide, comportant un dispositif de graissage, au moyen duquel une graisse de lubrification est appliquée, sur le guidage (16, 17) donnant appui à l'extrémité formant emmanchement d'outil, à un endroit, ou à plusieurs endroits disposés les uns à la suite des autres dans la direction longitudinale du mécanisme de frappe, au moyen de canaux de graissage (25a à 25d, 26a à 26d) reliés à une alimentation en graisse de lubrification et débouchant dans le guidage (16, 17),
caractérisé en ce que les canaux de graissage (25a à 25d, 26a à 26d) présentent les uns par rapport aux autres une résistance d'étranglement ayant une grandeur qui se modifie par degrés en fonction de la position du canal de graissage concerné par rapport à l'alimentation (14) en graisse de lubrification, de telle façon que cette résistance diminue lorsqu'augmente la longueur du chemin à accomplir par la graisse de lubrification, comprise chaque fois entre le canal de graissage (respectivement 25a, d et 26a, d) et le canal de graissage (respectivement 25b, c et 26b, c).

2. Dispositif suivant la revendication 1, caractérisé en ce que les canaux de graissage (25a à 25d, 26a à 26d) sont réalisés, au moins en partie, avec des organes d'étranglement.

3. Dispositif suivant la revendication 2, caractérisé en ce que les organes d'étranglement sont réalisés sous la forme d'étranglements réglables.

4. Dispositif suivant au moins l'une des revendications précédentes, caractérisé en ce que le tracé de l'alimentation (14) en graisse de lubrification dans la zone de guidage (douilles de palier 16, 17) est situé dans le carter (1c) assurant ce guidage.

5. Dispositif suivant au moins l'une des revendications précédentes, caractérisé en ce que l'alimentation en graisse de lubrification est réalisée sous la forme d'une canalisation de graissage (14) dirigée dans le sens longitudinal de la pointerolle, cette canalisation de graissage étant raccordée à plusieurs conduites circulaires (22, 24) comportant chacune plusieurs canaux de graissage (25a à 25d, 26a à 26d).

6. Dispositif suivant la revendication 5, caractérisé en ce que les conduites circulaires (22, 24) sont raccordées à la conduite de graissage (14) par l'intermédiaire d'alésages transversaux (21, 23) dont la résistance d'étranglement présente une valeur de grandeur différente, en fonction de la longueur du chemin parcouru par l'alimentation en graisse et diminue avec la longueur de ce chemin, de l'alésage transversal (21) à l'alésage transversal (23).

7. Dispositif suivant la revendication 6, caractérisé en ce que les alésages transversaux (23) sont réalisés, au moins en partie, avec des étranglements réglables (35).

8. Dispositif suivant au moins l'une des revendications précédentes, caractérisé en ce qu'au moins un canal de graissage (26c) est réalisé avec un dispositif de contrôle de la pression de graissage (27 à 29).

9. Dispositif suivant au moins l'une des revendications précédentes, caractérisé en ce que le canal de graissage (26c) présente un dispositif de contrôle de la pression de graissage auquel correspond le chemin d'alimentation en graisse de lubrification le plus long.

10. Dispositif suivant au moins l'une des revendications 8 à 9, caractérisé en ce qu'au moyen du dispositif de contrôle de la pression de graissage (27 à 29), est déclenché un signal d'alerte pour le cas où la grandeur de la pression mesurée de l'alimentation en graisse de lubrification s'abaisse en dessous de la valeur réglable prédéfinie.
